# EUROPEAN PATENT SPECIFICATION

(11) **EP 1 796 314 B1**
(45) Date of publication and mention of the grant of the patent: **30.07.2014**
(21) Application number: 05782128.2
(22) Date of filing: 31.08.2005
(51) Int. Cl.: H04L 12/28, H04L 12/58, H04L 29/06

(54) **A system and method for implementing online file storage based on a real-time communication platform**
System und Verfahren zur Implementierung einer Dateiablage auf der Basis einer Echtzeit-Kommunikationsplattform
Système et procédé pour réaliser un stockage de fichiers sur la base d'une plate-forme de communications en temps réel

(30) Priority: 31.08.2004 CN 200410051322; 31.08.2004 CN 200410051318; 30.09.2004 CN 200410051766
(43) Date of publication of application: 13.06.2007
(73) Proprietor: Tencent Technology (Shenzhen) Company Limited, Shenzhen, Guangdong 518044 (CN)
(72) Inventor: DU, Qingsheng, 4/F. East 2 Block. SEG Park, Shenzhen Guangdong 518044 (CN); WEI, Zhen, 4/F. East 2 Block. SEG Park, Shenzhen Guangdong 518044 (CN); XIA, Hongzhan, 4/F. East 2 Block. SEG Park, Shenzhen Guangdong 518044 (CN); YU, Shuangquan, 4/F. East 2 Block. SEG Park, Shenzhen Guangdong 518044 (CN)
(74) Representative: White, Duncan Rohan
(86) International application number: PCT/CN2005/001371
(87) International publication number: WO 2006/024230

(56) References cited:
- WO-A1-03/030030
- JP-A- 2004 013 479
- KR-B1- 100 449 017
- US-A1- 2003 051 101
- US-A1- 2003 200 268

## Description

### Field of the Invention

The present invention relates to the online storage technology, particularly to a communication system and method for implementing online file storage based on an instant messaging (IM) platform.

### Background of the Invention

Online storage is a remote storage service based on a Client/Server (C/S) mode, mainly providing basic file services such as storing, sharing, transferring, copying, etc.

There are two kinds of mode in the existing online storage: a Web mode and a special client-based mode. Among the two modes, the online storage in the Web mode usually bound with an e-mail box is easily accepted by users because it can be used like an e-mail box; and the online storage in the special client-based mode is the online storage service based on a special client software, which is usually bound with the Windows Explorer and is easily to be operated by users, and the functions and speed of the online storage in the special client-based mode can be guaranteed.

The existing remote online storages, however, all have some drawbacks. For example, the online storage in the Web mode provides bad basic file operations, because the steps of the basic file operations are fussy, and the functions and speed are all limited; while the online storage in the special client-based mode can be used only after the special online storage client is downloaded, holding back the popularity of the online storage service.

JP 2004013479 discloses a method in order to solve a problem that a terminal in a LAN accesses a file stored in a file server in another LAN via an external network, and the method includes that the application function in the terminal accesses the file stored in the file server, a local copy is stored in the terminal for various operations such as editing, and when an operation carried out on the local copy of the file by the application function in the terminal, the operation is reflected on the file in the file server through an application agent function.

US 2003/200268 discloses a system and method for sharing digital images over a network, such as the Internet, wherein the first person desires to send images from a first computer to a second person having- a second computer that includes a standard email program. The system and method include sending an email request with the images and an address of the second user from the first computer to a server. In response to receiving the email request, the images are stored on the server, and the server creates a standard email message from the email request. The method and system further include inserting at least one link to the stored images into the email message, and transmitting the email message over the network for delivery to the second user. The second user may then receive and open the email message on the second computer using the standard email program and click on the at least one link to display the images.

The invention is in the system of Claim 1 and the method of Claim 6.

It can be seen from the above that the communication system and method for implementing online file storage provides an online file storage service on the IM platform through combining the technologies of IM system and online file storage. Thus, a user can implement various online storage operations such as file storing, deleting, sharing, copying and the like through the existed IM client, without downloading a special online file storage client. By doing so, the operation is simple, and functions and storing and reading speeds the same as the ones provided by the online storage in the special client-based mode can be gained.

### Brief Description of the Drawings

Fig.1 shows a communication system for implementing online file storage based on an IM platform.
Fig.2 is a flowchart of a method for storing a file on the online file storage.
Fig.3 is a flowchart of a method for sharing a file on the online file storage.
Fig.4 is a schematic diagram illustrating an interaction between an online file storage user data server of a sharing user and an online file storage user data server of a shared user.
Fig.5 is a schematic diagram illustrating the communication system in accordance with the present invention.
Fig.6 is a flowchart of the method for online playing AV files in accordance with the present invention.

### Detailed description

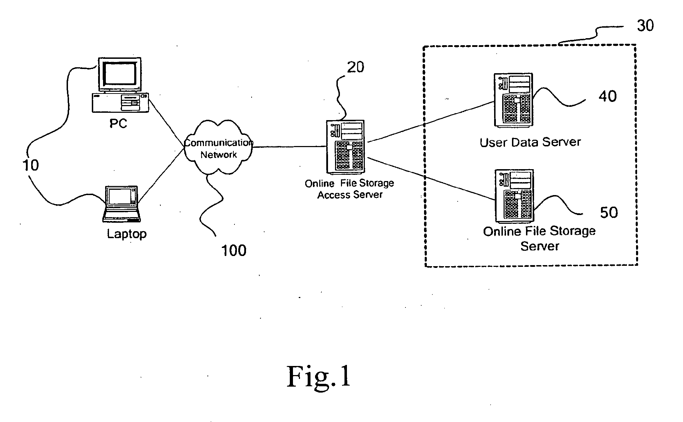

Herein is described a communication system for implementing online file storage based on an IM platform. Referring to Fig.1, the communication system mainly includes an IM client 10, an online file storage access server 20, and an online file storage server 30.

The IM client 10 can be installed on a personal computer (PC) or a laptop, and accesses a communication network 100 through means of wired or wireless communication, to provide an online file storage operation interface for users to facilitate them in choosing various online storage operations.

The online file storage access server 20 also accesses the communication network 100, mainly parsing IM protocols, verifying user online storage identifiers, processing user request logics and providing diverse services for users according to service classes to which the users belong.

The online file storage server 30 accesses the online file storage access server 20, mainly storing user files which are stored by users in the online file storage, processing such online storage operation requests as storing, deleting, sharing, copying, etc., and implementing such online storage operations to user files.

The online file storage server 30 can be further divided, according to functions, into an online file storage user data server 40 and an online file storage server 50 which all access the online file storage access server 20.

The online file storage user data server 40 mainly servers to store user data related with users other than user files in the online file storage, and the user data includes: directory structures of the user files in the online file storage, user identifiers, access count, etc., and the online file storage user data server 40 further serves to update the user date stored according to the operation results of implementing storing, deleting, sharing, copying, etc. on the user files.

The online file storage server 50 is mainly used to store the user files in the online file storage, process requests from the online file storage access server 20 such as file storing, deleting, sharing, copying, etc., to implement storing, deleting, sharing, copying, etc. for the files in the online file storage.

With expansion of domains and numbers of the users, there can be multiple online file storage data servers 40 each of which is used for storing user data of different users. The online file storage access server 20 interacts with each online file storage user data server through a uniform data interface.

According to the above communication system, users can store, delete or copy the files in the online file storage by directly clicking the online file storage operation interface of the IM client 10. After the users choose one of the above operations, the IM client 10 transmits a corresponding request message to the online file storage access server 20 via the communication network 100; and the online file storage server 20 parses the received request message and interacts with the online file storage server 30 according to the user's request, that is, interacting with the online file storage user data server 40 and the online file storage server 50 respectively, to implement such online storage operations as file storing, deleting, sharing, copying, or the like on the file.

Online storage methods for implementing storing; deleting, sharing as well as copying on a file on the online file storage will be hereunder described in detail through specific embodiments.

The first embodiment:

The method for implementing such traditional online storage operations as file storing, deleting, copying, and the like on the online file storage based on the IM platform is described in the embodiment.

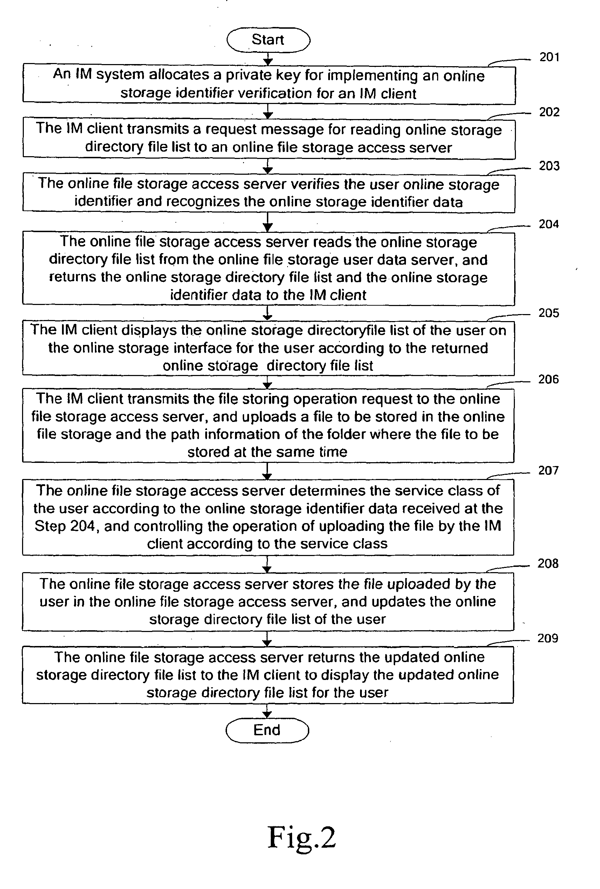

Fig.2 is a flowchart of the method for storing a file in the online file storage in accordance with the first embodiment. As shown in Fig.2, the method mainly includes the following steps:
Step 201: after a user logs on an IM system by an IM client, the IM system implements identifier verification for the IM client, and allocates a private key for implementing an online storage identifier verification for the IM client.
Step 202: the IM client transmitting a request message for reading online storage directory file list to the online file storage access server when the user clicks an online file storage interface of the IM client to open the online file storage, and carries the logging-on name of the user and the private key allocated by the IM system for the IM client in the request message.
Step 203: the online file storage access server verifies the user online storage identifier according to the logging-on name and private key carried in the request message for reading online storage directory file list, and recognizes the online storage identifier data corresponding to the user; wherein the online storage identifier includes a service class to which the user belongs, for example the user is a member user or not, and the like.
Step 204: the online file storage access server acquires the online storage directory file list of the user from the online file storage user data server, and returns the acquired online storage directory file list of the user and the recognized online storage identifier data corresponding to the user to the IM client.
Step 205: the IM client displays the online storage directory file list for the user on the online storage interface according to the returned online storage directory file list.
Step 206: the IM client transmits correspondingly a file storing operation request to the online file storage access server, and uploads the file to be stored in the online file storage and the path information of the folder where the file is to be stored at the same time, when the user chooses to store some file in a certain folder in the online file storage via the online file storage operation interface of the IM client.
Step 207: the online file storage access server determines the service class of the user according to the online storage identifier data received at the Step 204, and controlling the operation of uploading the file by the IM client according to the service class.

The service class includes a speed limitation for storing the file, a size limitation for the file to be uploaded, a number of uploading per day, etc.

Step 208: the online file storage access server interacts with the online file storage server to store the file uploaded by the user at the corresponding location on the online file storage server according to path information of the folder chosen by the user; further the online file storage access server interacts with the online file storage user data server to update the online storage directory file list of the user according to the path information of the folder chosen by the user.

Step 209: the online file storage access server returns the updated online storage directory file list to the IM client which will display the updated online storage directory file list on the online file storage operation interface for the user.

By far, the user has stored the file at the designated location on the online file storage, that is, establishing a connection between the file name displayed on the IM client and the file stored in the online file storage server. The user can therefore browse the stored file by clicking the file name displayed on the online file storage operation interface of the IM client.

During the procedure of storing a file, the online file storage access server, comparing with the online file storage user data server and the online file storage server, functions as a client to store the file uploaded by the user at the designated location on the online file storage server, and update the online storage directory file list of the online file storage user data server, and the online file storage access server interacts with the online file storage user data server and the online file storage server via connections established.

Further, the online file storage access server and the IM client all cache the file to be stored by the user so as to avoid some problems occurring during the procedure of storing. The online file storage server will directly re-ask the online file storage access server for the file to ultimately implement the storage operation for the file, if a file storing failures.

After the above-mentioned Step 205, the user can implement basic online storage operations such as choosing to delete the existed file in the online file storage, or choosing to copy the existed file in the online file storage to a local hard-disk, or the like through the online file storage operation interface of the IM client.

Upon receiving the above-mentioned online storage operation request, the IM client transmits the operation request to the online file storage access server via the communication network, and implements the various online storage operations requested by the user by the interaction between the online file storage access server and the online file storage server, for example, deleting the file in the online file storage server, or copying the file to the local disk where the IM client is located, or the like. Meanwhile, the online file storage access server need to interact with the online file storage user data server to update the online storage directory file list of the user stored in the online file storage user data server. During the procedure of the above-mentioned online storage operation, the procedure of the interaction between the IM client and the online file storage access server, the procedure of the interaction between the online file storage access server and the online file storage server, and the procedure of the interaction between the online file storage access server and the online file storage user data server are basically the same as the procedure of interaction illustrated in the procedure of storing a file in Fig.2, so there is no more description.

It can be seen from the above that a user can implement basic online storage operations such as traditional file storing, deleting, copying, etc. by simply using the online file storage operation interface provided by the IM client, and can acquire the online file storage functions and the storing and reading speed without downloading the specific online file storage client software, according to the online storage method described in the first embodiment.

The second embodiment:

Since sharing a file is also a basic operation among file operations, a detailed description of the method for sharing a file in the online file storage with other IM friends based on the IM platform is given in the second embodiment.

The method for sharing a file in the online file storage based on the IM platform and given in the embodiment is a third party sharing technology based on the IM platform, providing a function of sharing a file in the online file storage. By using the method described in the embodiment, a user can share a folder stored in the online file storage with IM friends of the user.

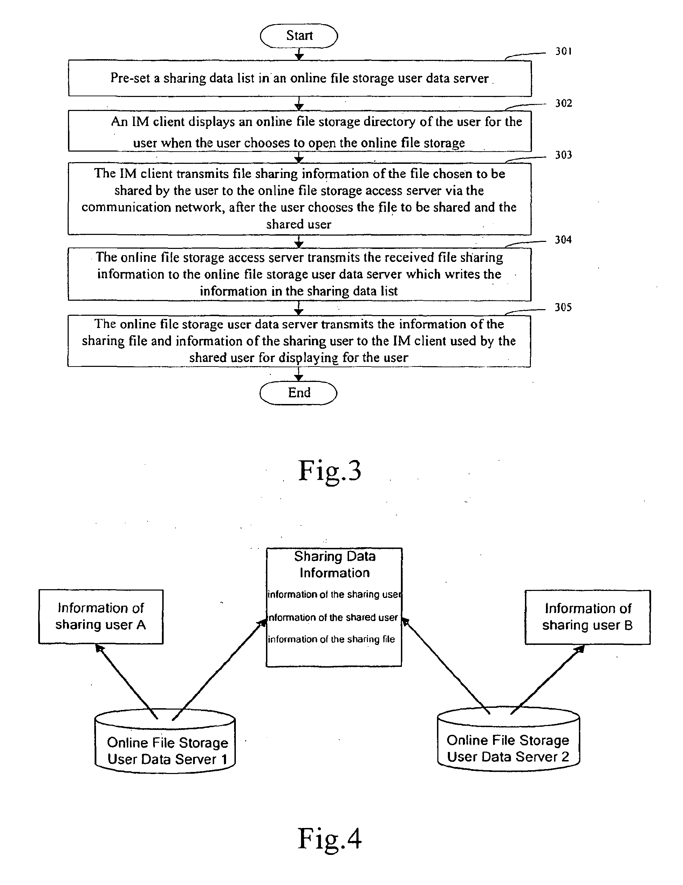

Fig.3 shows a flowchart of the method for sharing a file in the online file storage in accordance with the second embodiment. As shown in Fig.3, the method mainly includes the following steps:
Step 301: a sharing data list is pre-set in an online file storage user data server, wherein the sharing data list is used to store file sharing data information of each IM user.

And the file sharing data information mainly includes information of the user sharing the file (called sharing user for brief), information of the folder to be shared (called sharing folder for short), and information of the user whose file is shared (called shared user for short).

Step 302: the IM client displays the online storage directory of the user for the user on the online file storage operation interface, after the user logs on the IM system by the IM client and chooses to open the online file storage.

And the implementing method of the step is the same as the method described in the Steps 201 through 205 in the first preferred embodiment.

Step 303: after the user chooses the sharing folder and the shared user via the online file storage operation interface of the IM client, the IM client transmits the file sharing data information of the sharing file chosen to be shared by the user, which includes information of the sharing folder, information of the sharing user and information of the shared user to the online file storage access server through the communication network.

Step 304: the online file storage access server transmits the received file sharing data information to the online file storage user data server which writes the above-mentioned information to the sharing data list; wherein before Step 304, the online file storage access server further checks the authority of the sharing user; if the sharing user is authorized to share the file with the shared user, proceeds to Step 304; otherwise, the sharing user is rejected to implement the sharing file operation;

Step 305: an online file storage user data server transmits the information of the shaving file and information of the sharing user in the file sharing data information to the IM client used by the shared user via the online file storage access server, to display the information of the sharing user and the sharing folder shared by the sharing user on the online file storage operation interface of the IM client.

By doing so, a connection between the sharing folder name displayed on the IM client of the shared user and the file stored in the online file storage server of the sharing user is established. Therefore, the shared user can choose to read or download the sharing file shared by the sharing user by clicking the sharing folder displayed on the online file storage operation interface.

In Step 305, if there are more online file storage user data servers, and the online file storage user data server of the sharing user and the online file storage user data server of the shared user are different, the online file storage server of the sharing user has to transmit the information of the sharing file, information of the sharing user and information of the shared user to the online file storage user data server of the shared user which transmits the file sharing data information to the IM client of the shared user.

The schematic diagram illustrating the above interaction between the online file storage user data server of the sharing user and the online file storage user data server of the shared user is as shown in Fig.4. In Fig.4, user information of sharing user A is stored in online file storage user data server 1, while user information of shared user B is stored in online file storage user data server 2. Both of the online file storage user data server 1 and the online file storage user data server 2 store the same file sharing data information shared by the sharing user A and the shared user B. Those skilled in the art should appreciated that the consistency of the file sharing data information in each online file storage user data server is beneficial to simplification of the file sharing processing and improvement of the processing efficiency.

Although there may be multiple online file storage user data servers in the method in accordance with the embodiment, uniform data interfaces are adopted between the online file storage access server and the online file storage user data servers. This processing of using uniform data interfaces makes the processing of the data stored in different servers same as the processing of the data stored in one online file storage user data server. As such, the user data of the sharing user and the shared user can be respectively stored in different online file storage user data servers, which fully guarantees the volume of the system. Meanwhile, the data security is also assured by storing the information of the sharing file, information of the shared user and sharing data information respectively in the online file storage server and the online file storage user data server.

After Step 305, the IM client of the sharing user can directly read corresponding file sharing data information from the online file storage user data server of the sharing user via the online file storage access server, and return the file sharing data information to the IM client of the sharing user to display the acquired file sharing data information thereon for the sharing user, if the sharing user wants to query about the users who share the directory.

The IM client of the shared user can directly read file sharing data information from the online file storage user data server of the shared user via the online file storage access server, and return the file sharing data information to the IM client of the shared user to display the acquired file sharing data information thereon for the shared user, if the shared user wants to query about the users who share the directory.

If the shared user needs to download a file stored in the sharing folder shared by the sharing user, the IM client of the shared user reads file sharing data information from the online file storage user data server of the shared user via the online file storage access server to acquire the information of the sharing user; then the online file storage access server acquires the online storage directory file list of the sharing user from the online file storage user data server where the sharing user is located, and then reads the file from the designated location at the corresponding online file storage server, and returns the file to the client of the shared user. The above procedure is the procedure of the shared user downloading the sharing file shared by the sharing user.

During the procedure of downloading the sharing file, a user can adopt a transport protocol which is the same as the existing one used by online file storages. Since the existing transport protocol used by online file storages supports breakpoint resume transmission, and allows moderate data redundancy, the repeated call for data during the procedure of data query can be reduced, thereby accelerating the speed of forward and reverse data querying.

According to the method, the number of IM client friends can also be automatically determined, and a threshold can be set at the column of the sharing friend number set by the sharing user. Once the number of the friends chosen to be shared a file with the user exceeds the threshold, an updating procedure is automatically implemented to update the friend list of the IM client.

According to the method, a user can directly set the file to be shared with the IM friends via the online file storage operation interface of the IM client. For example, after an IM user chooses some folders displayed on the online file storage operation interface by clicking the right button of the mouse, the IM client has indeed called the local friend data of the IM system during the procedure of popping up a dialog box. The user can share the folder with the chosen friends by directly choosing the corresponding friends. It can be seen from the above that the method provides a convenient way for sharing data, greatly facilitating the IM friends in sharing information.

### The third embodiment:

In the second embodiment, the processing of downloading a file from the sharing folder of a friend is implemented according to a traditional manner of downloading a file, that is, directly and completely copying the sharing file to a local hard-disk or an online file storage. Those skilled in the art should understand that a great many of storage spaces on the online file storage or the local hard-disk will be occupied repeatedly when the traditional copying method is used. Meanwhile, since the whole file is needed to be copied completely, the procedure of the above downloading will spend a lot of time.

The third embodiment in accordance with the present invention gives a virtual copying method which can enable an IM user to virtually copy the sharing file of an IM friend to online file storage or local disk of the IM user, or copy a file in the online file storage to the sharing folder of the IM friend. This virtual operation not only saves storage spaces, but also reduces the time spending on the procedure of copying.

The virtual copying mentioned in the embodiment is a new manner of copying network files. For the user, the virtual copying operation has no difference from the traditional operation of copying a file. But for the storage system, the two kinds of operation are absolutely different. For a brief description, the file to be copied is called a source file; and the copied file is called a virtual file.

In a normal condition, source codes of the source file include two parts: a header and a text. The header includes a physical address and a control authority. Thus, the header and text can be divided during the procedure of generating a virtual file, and directly copy the header to generate the virtual file. Since the virtual file includes the information of the physical address of the source file, the source file can be found according to the information of the physical address included in the virtual file, that is, a reference of the source file, and the virtual file is connected to the source file through a manner of hard-connection. So, according to the method for generating a virtual file, the online file storage server can directly find the source file according to the address of the source file recorded in the virtual file when the user accesses the copied virtual file.

As the operation of the above virtual copying does not need to copy the whole source file, but just generates a file including the physical address and the operation authority of the source file instead, the size of the generated virtual file is very little without occupying too much storage spaces. In addition, the procedure of copying can be finished instantaneously as the size of the virtual file is small, saving the time spending on copying.

The main operations of the virtual copying include such operations as file copying, reading, deleting, etc., and the detailed procedure of implementing such operations is as the follows.
1) copying:
   when an IM user B chooses to copy a sharing file shared by an IM user A to its own online file storage via an online file storage operation interface of IM client B, the IM client B transmits a virtual copying request to the online file storage access server; the online file storage access server first checks whether the IM user B is authorized to read the sharing file of the IM user A; if the communication user B is authorized to read the sharing file of the IM user A, the online file storage access server requests according to the request of the IM user B the online file storage server of the IM user A to generate a virtual file according to the sharing file of the IM user A, and returns the generated virtual file name, the address information, and so on to the IM user B via the online file storage access server; the IM client B of the IM user B displays the returned virtual file name on the online storage directory of the IM user B via the online file storage operation interface. At this time, a connection between the virtual file name displayed on the IM client of the IM user B and the virtual file stored in the online file storage server is established. After the online file storage server generates the virtual file, the online file storage access server further need to update the online storage directory file list of the IM user B stored in the online file storage user data server of the IM user B.

   If the IM user B is authorized to write in the sharing folder of the IM user A, the IM user B may also copy the file stored in its own online file storage to the sharing folder of the IM user A.
2) reading:
   when the IM user B chooses to read some copied virtual file via the online file storage operation interface of the IM client B, the IM client B transmits a request for reading virtual file to the online file storage server via the online file storage access server; the online file storage server can find the source file according to the address of the source file recorded in the virtual file, and return the source file to the IM client B.
3) deleting:
   If the IM user B wants to delete a virtual file stored in online file storage, the online file storage server directly deletes the established virtual file, and updates the online file storage file list of the IM user B stored in the online file storage user data server. At this moment, the IM user B can not see the deleted file on the IM client B. The IM user A however can still see the source file stored in online file storage on the IM client A.

If the IM user A wants to delete the source file stored in online file storage server, the online file storage server does not delete the source file stored in itself, but just updates the online storage directory list of the IM user A in the online file storage user data server instead, and the IM user A thus can not see the deleted file through the IM client A. The operation just deletes the connection between the file name displayed on the IM client A and the source file stored in the online file storage server. At this time, the IM user B can still see copied file on the IM client B.

Only when all virtual files and connections pointing to the source file are deleted, that is, the reference number of the source file is zero; the online file storage server will delete the source file.

### The embodiment in accordance with the invention:

Along with development of multimedia services and requirements of users for multimedia services, more and more users wish that the online file storage can provide a function of playing AV files online to facilitate the users in listening to songs or watching video programs everywhere without downloading same files repeatedly, wherein the songs and the video programs are stored in the online file storages of the users.

The embodiment in accordance with the present invention provides a communication system for playing AV files online on an online file storage based on an IM platform and a method thereof, to implement a function of individually playing audio video files by user, wherein the online file storage is in accordance with the one provided by the present invention.

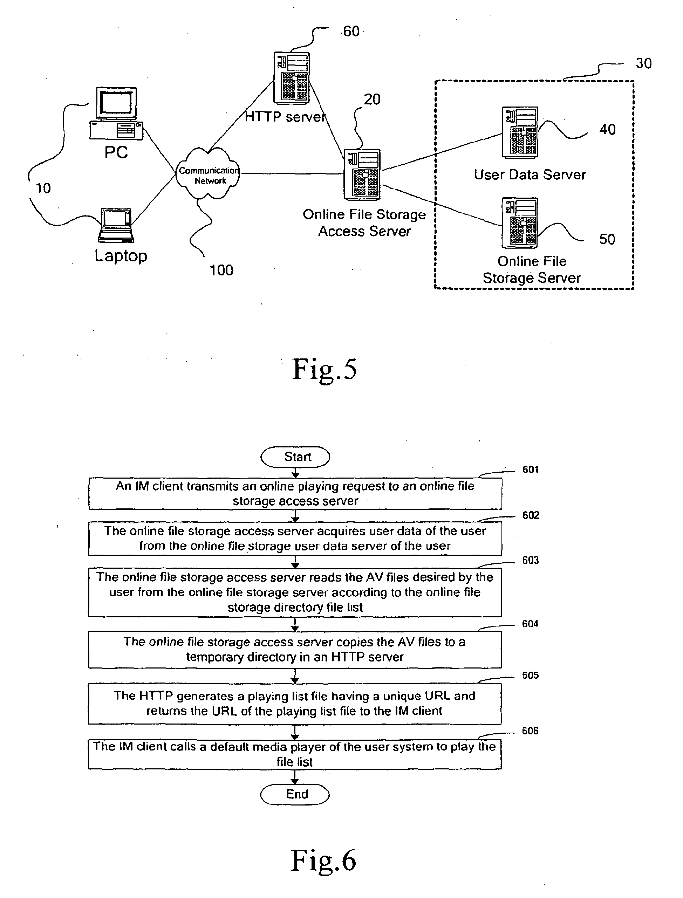

To implement the function of playing online, a flow media server 60 accessing the communication network 100 and the online file storage access server 20 is first needed to be added to the communication system illustrated in the present invention, which is used to temporarily store the AV files required playing online by the IM user, and generating a playing list file according to these AV files. The schematic diagram of the communication system illustrated in the embodiment is as shown in Fig.5.

The flow media server mentioned in the embodiment can be an HTTP server or a Real server, or the like.

In the above-mentioned communication system, after an IM user logs on successfully, and chooses to online listen to an AV file through the online file storage operation interface of the IM client 10, the online file storage access server 20 reads the corresponding AV file from the online file storage server 50 of the user, and copies the file to the flow media server 60. The flow media server 60 generates and transmits a playing list file to the IM client 10. Then, the IM client 10 calls a default media player of the user system to play the AV file in the file list, thereby implementing one procedure of online playing.

Fig.6 shows a flow chart of the method for implementing playing AV files online by using the communication system in accordance with the embodiment. As shown in Fig.6, the method mainly includes the following steps:
Step 601: after an IM user logs on and chooses to play a certain online folder or some files via the online file storage operation interface of the IM client, the IM client transmits an online playing request to the online file storage access server, wherein the request carries the file name or folder name and the path information chosen by the user.

It should be clarified that the online files chosen by the IM user to be played must be the file stored in the online file storage. If the online files chosen by the IM user to be played are not the file stored in the online file storage, the IM user first needs to upload related files to the online file storage server. The method for uploading can use the method illustrated in the first preferred embodiment.

Step 602: the online file storage access server acquires user data of the user from the online file storage user data server of the user.

The user data mainly includes an IM account number of the user, information of the user, the online storage directory file list of the file stored in the online file storage server, and the like.

Step 603: the online file storage access server reads the AV file to be played by the user from the online file storage server according to the online storage directory file list information of the user.

Step 604: the online file storage access server copies the AV files to a temporary directory in the flow media server.

Step 605: the flow media server generates a playing list file having a unique Uniformed Resource Locator (URL), and returns the URL of the playing list file to the IM client.

Step 606: the IM client calls a default media player of the user system to play the file list.

It can be seen from the above that, according to the communication system for playing AV files online based on the online file storage service of the IM platform and the method thereof, a user is allowed to listen to and watch online AV files stored in the online file storage conveniently as long as logging on online file storage anywhere, thereby the step of downloading and the like are omitted and the user requirements of implementing multimedia services are satisfied.

Additionally, those skilled in the art should understand that the method illustrated in the embodiment is allowed to play the AV files shared by an IM friend or the AV files copied from the sharing file of an IM friend in the virtual copying manner, through combining the methods of the embodiment with the methods illustrated in the second and third preferred embodiments. And the method for playing the above files is basically the same as the method illustrated in the embodiment. But it should be noted that, during the procedure of playing the AV files shared by an IM friend, the online file storage access server needs to first find the online file storage user data server where the sharing user is located according to the file sharing data information to acquire the user data of the sharing user, then can find the AV file shared by the sharing user from the online file storage server. During playing the file virtually copied, the online file storage server needs first find the source file stored by itself according to the information of the address of the source file included in the virtual file, and then copy the source file to the flow media server.

## Claims

1. A communication system for implementing online file storage based on an instant messaging, IM, platform, comprising: an IM client (10) adapted to access a communication network (100) and an online file storage access server (20) adapted to access the communication network (100), an online file storage server (50) adapted to access the online file storage access server (20), and a flow media server (60) adapted to access the communication network (100) and the online file storage access server (20);
wherein the IM client (10) is adapted to provide an online file storage operation interface via which a user chooses an online file storage operation;
the online file storage access server (20) is adapted to parse an IM protocol, verify a user online storage identifier and process a user request logic from the IM client (10); and
the online file storage server (50) is adapted to store files stored by the user in the online file storage and directory information, and process a file request from the online file storage access server (20) to implement file operations;
the flow media server (60) is adapted to access the communication network (100) and the online file storage access server (20), temporarily store audio video, AV, files to be played online by the user, generate a playing list and transmit the playing list to the IM client (10);
the IM client (10) is further adapted to start a local media player to play the files in the playing list.

2. The communication system of claim 1, wherein the online file storage server further comprises: at least one online file storage user data server and at least one online file storage server adapted to access the online file storage access server;
wherein the online file storage user data server is adapted for storing user data related with the user, and updating the user data stored according to a result of implementing the file operations; and
the online file storage server is adapted for storing user files that the user stores in the online file storage, and processing the file request from the online file storage access server to implement file operations comprising storing, deleting, sharing and/or copying.

3. The communication system of claim 2, wherein the communication system comprises two or more than two online file storage user data servers; and the online file storage access server is adapted to interact with each online file storage user data server via a uniform data interface.

4. The communication system of any of claims 1 to 3, wherein the IM client is adapted to accesse the communication network via wired or wireless communication.

5. The communication system of claim 1, wherein the flow media server is a Hyper Text Transport Protocol, HTTP, server or a Real server.

6. A method for implementing online file storage in a communication system implementing online file storage based on an instant messaging, IM, platform comprising: an IM client accessing a communication network and an online file storage access server accessing the communication network, an online file storage server accessing the online file storage access server, and a flow media server accessing the communication network and the online file storage access server, comprising:
transmitting (202, 601), by the IM client, a file request to the online file storage access server, after an IM user chooses to implement a file operation on a file in the online file storage via the IM client;
acquiring (204, 602), by the online file storage access server, user data of the IM user according to the received file request from an online file storage user data server;
interacting (207, 208, 603), by the online file storage access server, with the online file storage server according to the acquired user data, implementing the file operation requested by the user, and updating the user data of the IM user in the online file storage user data server according to a result of the file operation; and
returning (209, 605), by the online file storage access server, the result of the file operation to the IM client; and the method further comprising:
reading (603), by the online file storage access server, an audio video, AV, file to be played online chosen by the IM user through the IM client from the online file storage server;
copying (604), by the online file storage access server, the AV file to the flow media server;
generating (605), by the flow media server, a playing list and transmitting the playing list to the IM client; and
starting (606), by the IM client, a local media player to play the AV file in the playing list.

7. The method of claim 6, before the process of transmitting the file request, further comprising:
logging on the IM system, by the IM user, via the IM client;
implementing an identifier verification and recognizing online storage identifier data corresponding to the user, by the IM system;
transmitting (202), by the IM client, a request for reading online storage directory list to the online file storage access server;
acquiring (204), by the online file storage access server, an online storage directory file list of the user from the online file storage user data server, and returning the acquired online storage directory file list of the user and the recognized online storage identifier data corresponding to the user to the IM client for displaying.

8. The method of claim 7, upon the IM system recognizing online storage identifier data corresponding to the user, further comprising:
returning (201), by the IM system, a private key to the IM client;
and carrying (202), by the IM client, a logging-on name and the private key in the request for reading online storage directory list; verifying (203), by the online file storage access server, the online storage identifier of the user according to the received logging-on name and the private key after the online file storage access server receives the request; if the verification is passed, proceeding with the process; otherwise, rejecting the request of the user.

9. The method of claim 6, wherein the user data further comprises: an online storage directory file list of the IM client.

10. The method of any of claims 6 to 9, wherein the file request comprises file storing, deleting, or copying operation request;
the process of transmitting the file request further comprises: transmitting (205, 206), by the IM client, a file chosen by the IM user to be stored in the online file storage and path information for storing the file, or the information of file to be deleted or copied to the online file storage access server; and
the process of implementing the file requested by the user comprises: storing (207, 208) a file from the IM client in the online file storage server, or deleting from the online file storage server the file chosen by the IM user to be deleted, or reading the file chosen to be read by the IM user from the online file storage server and transmitting the file chosen to be read by the IM user to the IM client.

11. The method of claim 6, wherein the process of returning a playing list file to an IM client comprises: returning a Uniformed Resource Locator, URL, of the generated playing list file to the IM client.

12. The method of claim 6, before the process of reading the AV file chosen to be played online, further comprising: transmitting, by the IM client, an online playing request to the online file storage access server, after the IM user chooses to play the file online in the online file storage via the IM client.

13. The method of claim 6, wherein the file chosen to be played online by the IM user is a virtual file; and
the process of reading the file chosen to be played online by the user from the online file storage server comprises: finding the virtual file chosen to be played by the user from the online file storage server, and reading a source file from the online file storage server according to the address of the source file recorded in the virtual file.

## Patentansprüche

1. Kommunikationssystem zum Implementieren von Onlinedateispeicher auf der Grundlage einer Sofortnachrichtenversand-(IM-)Plattform, umfassend: einen IM-Client (10), der dafür eingerichtet ist, auf ein Kommunikationsnetzwerk (100) zuzugreifen, einen Onlinedateispeicher-Zugangsserver (20), der dafür eingerichtet ist, auf das Kommunikationsnetzwerk (100) zuzugreifen, einen Onlinedateispeicher-Server (50), der dafür eingerichtet ist, auf den Onlinedateispeicher-Zugangsserver (20) zuzugreifen, und einen Flow-Mediaserver (60), der dafür eingerichtet ist, auf das Kommunikationsnetzwerk (100) und den Onlinedateispeicher-Zugangsserver (20) zuzugreifen;
worin der IM-Client (10) dafür eingerichtet ist, eine Onlinedateispeicher-Operationsschnittstelle bereitzustellen, über die ein Benutzer eine Onlinedateispeicher-Operation wählt;
der Onlinedateispeicher-Zugangsserver (20) dafür eingerichtet ist, ein IM-Protokoll zu parsen, eine Benutzer-Onlinespeicherkennung zu überprüfen und eine Benutzeranfragelogik vom IM-Client (10) zu verarbeiten; und
der Onlinedateispeicher-Server (50) dafür eingerichtet ist, Dateien, die durch den Benutzer im Onlinedateispeicher gespeichert wurden, und Verzeichnisinformation zu speichern und eine Dateianfrage vom Onlinedateispeicher-Zugangsserver (20) zu verarbeiten, um Dateioperationen zu implementieren;
der Flow-Mediaserver (60) dafür eingerichtet ist, auf das Kommunikationsnetzwerk (100) und den Onlinedateispeicher-Zugangsserver (20) zuzugreifen, Audio/Video-(AV-)Dateien zeitweilig zu speichern, um online durch den Benutzer abgespielt zu werden, eine Abspielliste zu erzeugen und die Abspielliste zum IM-Client (10) zu übertragen;
wobei der IM-Client (10) ferner dafür eingerichtet ist, eine lokale Medienabspieleinrichtung zu starten, um die Dateien in der Abspielliste abzuspielen.

2. Kommunikationssystem nach Anspruch 1, worin der Onlinedateispeicher-Server ferner umfasst: mindestens einen Onlinedateispeicher-Benutzerdatenserver und mindestens einen Onlinedateispeicher-Server, der dafür eingerichtet ist, auf den Onlinedateispeicher-Zugangsserver zuzugreifen;
worin der Onlinedateispeicher-Benutzerdatenserver eingerichtet ist zum Speichern von Benutzerdaten, die dem Benutzer zugeordnet sind, und zum Aktualisieren der gespeicherten Benutzerdaten gemäß einem Ergebnis des Implementierens der Dateioperationen; und
der Onlinedateispeicher-Server eingerichtet ist zum Speichern von Benutzerdateien, die der Benutzer im Onlinedateispeicher speichert, und zum Verarbeiten der Dateianfrage vom Onlinedateispeicher-Zugangsserver, um Dateioperationen zu implementieren, die Speichern, Löschen, gemeinsam Nutzen und/oder Kopieren umfassen.

3. Kommunikationssystem nach Anspruch 2, worin das Kommunikationssystem zwei oder mehr als zwei Onlinedateispeicher-Benutzerdatenserver umfasst und der Onlinedateispeicher-Zugangsserver dafür eingerichtet ist, über eine einheitliche Datenschnittstelle mit jedem Onlinedateispeicher-Benutzerdatenserver zu interagieren.

4. Kommunikationssystem nach einem der Ansprüche 1 bis 3, worin der IM-Client dafür eingerichtet ist, mittels drahtgebundener oder drahtloser Kommunikation auf das Kommunikationsnetzwerk zuzugreifen.

5. Kommunikationssystem nach Anspruch 1, worin der Flow-Mediaserver ein Hypertexttransportprotokoll-(HTTP-)Server oder ein Real-Server ist.

6. Verfahren zum Implementieren von Onlinedateispeicher in einem Kommunikationssystem, das Onlinedateispeicher auf der Grundlage einer Sofortnachrichtenversand-(IM-)Plattform implementiert und umfasst: einen IM-Client, der auf ein Kommunikationsnetzwerk zugreift, und einen Onlinedateispeicher-Zugangsserver, der auf das Kommunikationsnetzwerk zugreift, einen Onlinedateispeicher-Server, der auf den Onlinedateispeicher-Zugangsserver zugreift, und einen Flow-Mediaserver, der auf das Kommunikationsnetzwerk und auf den Onlinedateispeicher-Zugangsserver zugreift, umfassend:
durch den IM-Client erfolgendes Übertragen (202, 601) einer Dateianfrage zum Onlinedateispeicher-Zugangsserver, nachdem ein IM-Benutzer wählt, über den IM-Client eine Dateioperation auf einer Datei im Onlinedateispeicher zu implementieren;
durch den Onlinedateispeicher-Zugangsserver erfolgendes Erlangen (204, 602) von Benutzerdaten des IM-Benutzers gemäß der von einem Onlinedateispeicher-Benutzerdatenserver empfangenen Dateianfrage;
durch den Onlinedateispeicher-Zugangsserver erfolgendes Interagieren (207, 208, 603) mit dem Onlinedateispeicher-Server gemäß den erlangten Benutzerdaten, Implementieren der durch den Benutzer angefragten Dateioperation und Aktualisieren der Benutzerdaten des IM-Benutzers im Onlinedateispeicher-Benutzerdatenserver gemäß einem Ergebnis der Dateioperation; und
durch den Onlinedateispeicher-Zugangsserver erfolgendes Zurücksenden (209, 605) des Ergebnisses der Dateioperation zum IM-Client; und wobei das Verfahren ferner umfasst:
durch den Onlinedateispeicher-Zugangsserver erfolgendes Lesen (603) einer online abzuspielenden Audio/Video-(AV-)Datei aus dem Onlinedateispeicher-Server, die durch den IM-Benutzer über den IM-Client ausgewählt wurde;
durch den Onlinedateispeicher-Zugangsserver erfolgendes Kopieren (604) der AV-Datei zum Flow-Mediaserver;
durch den Flow-Mediaserver erfolgendes Erzeugen (605) einer Abspielliste und Übertragen der Abspielliste zum IM-Client; und
Starten (606) einer lokalen Medienabspieleinrichtung durch den IM-Client, um die AV-Datei in der Abspielliste abzuspielen.

7. Verfahren nach Anspruch 6, ferner vor dem Prozess des Übertragens der Dateianfrage umfassend:
durch den IM-Benutzer mittels des IM-Clients erfolgendes Anmelden im IM-System;
Implementieren einer Kennungsüberprüfung und Erkennen von Onlinespeicher-Kennungsdaten, die dem Benutzer entsprechen, durch das IM-System;
Übertragen (202) einer Anfrage zum Lesen einer Onlinespeicher-Verzeichnisliste zum Onlinedateispeicher-Zugangsserver durch den IM-Client;
durch den Onlinedateispeicher-Zugangsserver erfolgendes Erlangen (204) einer Onlinespeicher-Verzeichnisdateiliste des Benutzers vom Onlinedateispeicher-Benutzerdatenserver und Zurücksenden der erlangten Onlinespeicher-Verzeichnisdateiliste des Benutzers und der dem Benutzer entsprechenden erkannten Onlinespeicher-Kennungsdaten zum Anzeigen an den IM-Client.

8. Verfahren nach Anspruch 7, ferner bei Erkennen von dem Benutzer entsprechenden Onlinespeicher-Kennungsdaten durch das IM-System umfassend:
Zurücksenden (210) eines privaten Schlüssels durch das IM-System zum IM-Client;
und durch den IM-Client erfolgendes Befördern (202) eines Anmeldenamens und des privaten Schlüssels in der Anfrage zum Lesen der Onlinespeicher-Verzeichnisliste; durch den Onlinedateispeicher-Zugangsserver erfolgendes Überprüfen (203) der Onlinedateispeicher-Kennung des Benutzers gemäß dem empfangenen Anmeldenamen und des privaten Schlüssels, nachdem der Onlinedateispeicher-Zugangsserver die Anfrage empfängt; wenn die Überprüfung bestanden wird, Fortfahren mit dem Prozess; andernfalls Abweisen der Anfrage des Benutzers.

9. Verfahren nach Anspruch 6, worin die Benutzerdaten ferner umfassen: eine Onlinespeicher-Verzeichnisdateiliste des IM-Clients.

10. Verfahren nach einem der Ansprüche 6 bis 9, worin die Dateianfrage eine Dateispeicher-, -lösch- oder -kopieroperationsanfrage umfasst;
wobei der Prozess des Übertragens der Dateianfrage ferner umfasst: durch den IM-Client erfolgendes Übertragen (205, 206) einer durch den IM-Benutzer ausgewählten im Onlinedateispeicher zu speichernden Datei und der Pfadinformation zum Speichern der Datei oder der Information der zu löschenden oder zu kopierenden Datei zum Onlinedateispeicher-Zugangsserver; und
der Prozess des Implementierens der durch den Benutzer angefragten Datei umfasst: Speichern (207, 208) einer Datei vom IM-Client im Onlinedateispeicher-Server, oder Löschen der durch den IM-Benutzer zum Löschen ausgewählten Datei vom Onlinedateispeicher-Server, oder Lesen der durch den IM-Benutzer zum Lesen ausgewählten Datei aus dem Onlinedateispeicher-Server, und Übertragen der durch den IM-Benutzer zum Lesen ausgewählten Datei zum IM-Client.

11. Verfahren nach Anspruch 6, worin der Prozess des Zurücksendens einer Abspiellistendatei an einen IM-Client umfasst: Zurücksenden eines einheitlichen Quellenlokalisierers, URL, der erzeugten Abspiellistendatei an den IM-Client.

12. Verfahren nach Anspruch 6, ferner vor dem Prozess des Lesens der zum Online-Abspielen ausgewählten AV-Datei umfassend: durch den IM-Client erfolgendes Übertragen einer Online-Abspielanfrage zum Onlinedateispeicher-Zugangsserver, nachdem der IM-Benutzer wählt, die Datei mittels des IM-Clients online im Onlinedateispeicher abzuspielen.

13. Verfahren nach Anspruch 6, worin die durch den IM-Benutzer zum Online-Abspielen ausgewählte Datei eine virtuelle Datei ist; und
der Prozess des Lesens der durch den IM-Benutzer zum Online-Abspielen ausgewählten Datei vom Onlinedateispeicher-Server umfasst: Finden der virtuellen Datei, die durch den IM-Benutzer zum Online-Abspielen vom Onlinedateispeicher-Server ausgewählt wurde, und Lesen einer Quelldatei aus dem Onlinedateispeicher-Server gemäß der in der virtuellen Datei aufgezeichneten Adresse der Quelldatei.

## Revendications

1. Système de communication pour mettre en oeuvre un stockage de fichiers en ligne basé sur une plateforme de messagerie instantanée, IM, comprenant : un client IM (10) approprié pour accéder à un réseau de communication (100) et un serveur d'accès au stockage de fichiers en ligne (20) approprié pour accéder au réseau de communication (100), un serveur de stockage de fichiers en ligne (50) approprié pour accéder au serveur d'accès au stockage de fichiers en ligne (20) et un serveur de flux média (60) approprié pour accéder au réseau de communication (100) et au serveur d'accès au stockage de fichiers en ligne (20) ;
dans lequel le client IM (10) est approprié pour fournir une interface d'opération de stockage de fichiers en ligne par l'intermédiaire de laquelle un utilisateur choisit une opération de stockage de fichiers en ligne ;
le serveur d'accès au stockage de fichiers en ligne (20) est approprié pour analyser un protocole IM, vérifier un identifiant de stockage en ligne d'utilisateur et traiter une logique de demande d'utilisateur à partir du client IM (10) ; et
le serveur de stockage de fichiers en ligne (50) est approprié pour stocker des fichiers stockés par l'utilisateur dans le stockage de fichiers en ligne et des informations de répertoire, et traiter une demande de fichier provenant du serveur d'accès au stockage de fichiers en ligne (20) afin de mettre en oeuvre des opérations de fichier ;
le serveur de flux média (60) est approprié pour accéder au réseau de communication (100) et au serveur d'accès au stockage de fichiers en ligne (20), stocker de manière temporaire des fichiers audio vidéo, AV, destinés à être lus en ligne par l'utilisateur, générer une liste de lecture et transmettre la liste de lecture au client IM (10) ;
le client IM (10) est en outre approprié pour ouvrir un lecteur média local afin qu'il lise les fichiers de la liste de lecture.

2. Système de communication selon la revendication 1, dans lequel le serveur de stockage de fichiers en ligne comprend en outre : au moins un serveur de données d'utilisateur de stockage de fichiers en ligne et au moins un serveur de stockage de fichiers en ligne approprié pour accéder au serveur d'accès au stockage de fichiers en ligne ;
dans lequel le serveur de données d'utilisateur de stockage de fichiers en ligne est approprié pour stocker des données d'utilisateur en rapport avec l'utilisateur, et mettre à jour les données d'utilisateur stockées en fonction d'un résultat de la mise en oeuvre des opérations de fichier ; et
le serveur de stockage de fichiers en ligne est approprié pour stocker des fichiers d'utilisateur que l'utilisateur stocke dans le stockage de fichiers en ligne, et traiter la demande de fichier provenant du serveur d'accès au stockage de fichiers en ligne pour mettre en oeuvre des opérations de fichier comprenant un stockage, une suppression, un partage et/ou une copie.

3. Système de communication selon la revendication 2, dans lequel le système de communication comprend deux ou plus de deux serveurs de données d'utilisateur de stockage de fichiers en ligne ; et le serveur d'accès au stockage de fichiers en ligne est approprié pour interagir avec chaque serveur de données d'utilisateur de stockage de fichiers en ligne par l'intermédiaire d'une interface de données uniforme.

4. Système de communication selon l'une quelconque des revendications 1 à 3, dans lequel le client IM est approprié pour accéder au réseau de communication par l'intermédiaire d'une communication filaire ou sans fil.

5. Système de communication selon la revendication 1, dans lequel le serveur de flux média est un serveur Hyper Text Transport Protocol, HTTP, ou un serveur Real.

6. Procédé de mise en oeuvre d'un stockage de fichiers en ligne dans un système de communication mettant en oeuvre un stockage de fichiers en ligne basé sur une plateforme de messagerie instantanée, IM, comprenant : un client IM accédant à un réseau de communication et un serveur d'accès au stockage de fichiers en ligne accédant au réseau de communication, un serveur de stockage de fichiers en ligne accédant au serveur d'accès au stockage de fichiers en ligne, et un serveur de flux média accédant au réseau de communication et au serveur d'accès au stockage de fichiers en ligne, comprenant les étapes consistant à :
transmettre (202, 601), grâce au client IM, une demande de fichier vers le serveur d'accès au stockage de fichiers en ligne, après qu'un utilisateur IM choisit de mettre en oeuvre une opération de fichier sur un fichier du stockage de fichiers en ligne par l'intermédiaire du client IM ;
acquérir (204, 602), grâce au serveur d'accès au stockage de fichiers en ligne, des données d'utilisateur de l'utilisateur IM auprès d'un serveur de données d'utilisateur de stockage de fichiers en ligne en fonction de la demande de fichier reçue ;
interagir (207, 208, 603), grâce au serveur d'accès au stockage de fichiers en ligne, avec le serveur de stockage de fichiers en ligne en fonction des données d'utilisateur acquises, mettre en oeuvre l'opération de fichier demandée par l'utilisateur, et mettre à jour les données d'utilisateur de l'utilisateur IM dans le serveur de données d'utilisateur de stockage de fichiers en ligne en fonction d'un résultat de l'opération de fichier ; et
renvoyer (209, 605), grâce au serveur d'accès au stockage de fichiers en ligne, le résultat de l'opération de fichier vers le client IM ; et le procédé comprenant en outre les étapes consistant à :
lire (603), grâce au serveur d'accès au stockage de fichiers en ligne, un fichier audio vidéo, AV, à lire en ligne choisi par l'utilisateur IM par l'intermédiaire du client IM depuis le serveur de stockage de fichiers en ligne ;
copier (604), grâce au serveur d'accès au stockage de fichiers en ligne, le fichier AV vers le serveur de flux média ;
générer (605), grâce au serveur de flux media, une liste de lecture et transmettre la liste de lecture au client IM ; et
ouvrir (606), grâce au client IM, un lecteur média local afin de lire le fichier AV de la liste de lecture.

7. Procédé selon la revendication 6, préalable à l'étape de transmission de la demande de fichier, comprenant en outre les étapes consistant à :
s'identifier, de la part de l'utilisateur IM, sur le système IM par l'intermédiaire du client IM ;
mettre en oeuvre une vérification d'identifiant et reconnaître des données d'identifiant de stockage en ligne correspondant à l'utilisateur, grâce au système IM ;
transmettre (202) au serveur d'accès au stockage de fichiers en ligne, grâce au client IM, une demande de lecture de liste de répertoires de stockage en ligne ;
acquérir (204), grâce au serveur d'accès au stockage de fichiers en ligne, une liste de fichiers de répertoire de stockage en ligne de l'utilisateur à partir du serveur de données d'utilisateur de stockage de fichiers en ligne, et renvoyer vers le client IM la liste de fichiers de répertoire de stockage en ligne de l'utilisateur acquise et les données d'identifiant de stockage en ligne reconnues correspondant à l'utilisateur, pour affichage.

8. Procédé selon la revendication 7, dès lors que le système IM reconnait des données d'identifiant de stockage en ligne correspondant à l'utilisateur, comprenant en outre les étapes consistant à :
renvoyer (201), grâce au système IM, une clé privée vers le client IM ;
et transporter (202), grâce au client IM, un nom de connexion et la clé privée dans la demande de lecture de liste de répertoire de stockage en ligne ; vérifier (203), grâce au serveur d'accès au stockage de fichiers en ligne, l'identifiant de stockage en ligne de l'utilisateur en fonction du nom de connexion reçu et de la clé privée après que le serveur d'accès au stockage de fichiers en ligne reçoit la demande ; si la vérification est réussie, poursuivre la mise en oeuvre du procédé ; sinon, rejeter la demande de l'utilisateur.

9. Procédé selon la revendication 6, dans lequel les données d'utilisateur comprennent en outre : une liste de fichiers de répertoire de stockage en ligne du client IM.

10. Procédé selon l'une quelconque des revendications 6 à 9, dans lequel la demande de fichier comprend une demande d'opération de stockage, de suppression ou de copie de fichier ;
le processus de transmission de la demande de fichier comprend en outre l'étape consistant à : transmettre (205, 206), grâce au client IM, un fichier choisi par l'utilisateur IM comme devant être stocké dans le stockage de fichiers en ligne et des informations de chemin d'accès pour stocker le fichier, ou les informations concernant un fichier à supprimer ou à copier vers le serveur d'accès au stockage de fichiers en ligne ; et
le processus de mise en oeuvre du fichier demandé par l'utilisateur comprend les étapes consistant à : stocker (207, 208) un fichier depuis le client IM dans le serveur de stockage de fichiers en ligne, ou supprimer depuis le serveur de stockage de fichiers en ligne le fichier à supprimer choisi par l'utilisateur IM, ou lire à partir du serveur de stockage de fichiers en ligne le fichier choisi comme devant être lu par l'utilisateur IM et transmettre au client IM le fichier choisi comme devant être lu par l'utilisateur IM.

11. Procédé selon la revendication 6, dans lequel l'étape consistant à renvoyer un fichier de liste de lecture vers un client IM comprend l'étape consistant à : renvoyer au client IM une adresse URL du fichier de liste de lecture généré.

12. Procédé selon la revendication 6, précédant l'étape de lecture du fichier AV choisi comme devant être lu en ligne, comprenant en outre l'étape consistant à : transmettre, grâce au client IM, une demande de lecture en ligne vers le serveur d'accès au stockage de fichiers en ligne, après que l'utilisateur IM choisit de lire en ligne le fichier présent dans le stockage de fichiers en ligne par l'intermédiaire du client IM.

13. Procédé selon la revendication 6, dans lequel le fichier choisi comme devant être lu en ligne par l'utilisateur IM est un fichier virtuel ; et
l'étape de lecture du fichier choisi comme devant être lu en ligne par l'utilisateur à partir du serveur de stockage de fichiers en ligne comprend les étapes consistant à : trouver le fichier virtuel choisi comme devant être lu par l'utilisateur à partir du serveur de stockage de fichiers en ligne, et lire un fichier source à partir du serveur de stockage de fichiers en ligne en fonction de l'adresse du fichier source enregistrée dans le fichier virtuel.
